## Europäisches Patentamt

(19) **European Patent Office**

**Office européen des brevets**

(11) Veröffentlichungsnummer: **0 141 353**
**B1**

(12) **EUROPÄISCHE PATENTSCHRIFT**

(45) Veröffentlichungstag der Patentschrifft: 07.02.90

(21) Anmeldenummer: 84112637.8

(22) Anmeldetag: 19.10.84

(51) Int. Cl.⁵: $H\ 01\ M\ 10/39$, $H\ 01\ M\ 2/02$

(54) Elektrochemische Speicherzelle.

(30) Priorität: 08.11.83 DE 3340264

(43) Veröffentlichungstag der Anmeldung:
15.05.85 Patentblatt 85/20

(45) Bekanntmachung des Hinweises auf die Patenterteilung:
07.02.90 Patentblatt 90/06

(84) Bennante Vertragsstaaten:
BE FR GB IT NL

(56) Entgegenhaltungen:
EP-A-0 064 213
WO-A-82/04501
FR-A-2 390 024
GB-A-1 587 905
GB-A-2 018 500
GB-A-2 020 884
US-A-4 131 226

(73) Patentinhaber: **Asea Brown Boveri Aktiengesellschaft**
**Kallstadter Strasse 1**
**D-6800 Mannheim-Käfertal (DE)**

(72) Erfinder: **Hasenauer, Dieter, Ing. (grad.)**
**Freudenbergstrasse 13**
**D-6940 Weinheim (DE)**
Erfinder: **Hug, Kuno**
**Steinbachweg 14**
**D-6900 Heidelberg-Ziegelhausen (DE)**

(74) Vertreter: **Rupprecht, Klaus, Dipl.-Ing.**
**c/o Asea Brown Boveri Aktiengesellschaft**
**Zentralbereich Patente Postfach 100351**
**D-6800 Mannheim 1 (DE)**

LIBERGRAF, STOCKHOLM 1990

## Beschreibung

Die Erfindung bezieht sich auf eine elektrochemische Speicherzelle gemäß dem Oberbegriff des Patentanspruches 1.

Solche wiederaufladbaren elektrochemischen Speicherzellen werden in Hochtemperatur-Speicherbatterien verwendet, die beispielsweise als Energiequelle von Elektromotoren eine Anwendung finden.

Elektrochemische Speicherzellen auf das Basis von Alkalimetall und Chalkogen, die einen Anodenraum und einen Kathodenruam aufweisen, welche durch einen alkaliionenleitenden Festelektrolyten voneinander getrennt sind, eignen sich sehr gut zum Aufbau von Akkumulatoren hoher Energie und Leistungsdichte. Vorzugsweise sind die Speicherzellen becherförmig ausgebildet, d.h. sie werden von einem becherförmigen metallischen Gehäuse nach außenhin begrenzt und weisen innen einen Festelektrolyten auf, der ebenfalls becherförmig ausgebildet ist.

Die Abmessungen des Festelektrolyten sind so gewählt, daß zwischen seinen Außenflächen und den Innenflächen des metallischen Gehäuses ein zusammenhängender Zwischenraum verbleibt. Es gibt zwei Arten von Speicherzellen, und zwar die normale Speicherzelle und die inverse Speicherzelle. Bei der normalen Speicherzelle ist der Kathodenraum zwischen dem Festelektrolyten und dem metallischen Gehäuse angeordnet, während sich der Anodenraum im Inneren des becherförmigen Festelektrolyten befindet. Bei der inversen Speicherzelle sind die Reaktantenräume gerade umgekehrt angeordnet. Die Gehäuse dieser Speicherzellen sind vorzugsweise aus Aluminium oder Stahl gefertigt. Von Nachteil ist hierbei, daß insbesondere Aluminium sehr schnell durch den im Kathodenraum angeordneten Schwefel bzw. das sich bei der Entladung der Speicherzelle bildende Natriumpolysulfid rasch korrodiert wird. Bei den bis jetzt bekannten Speicherzellen dient das metallische Gehäuse nicht nur zur Begrenzung der Speicherzelle sondern auch als elektrische Leiter. Durch den im Kathodenraum angeordneten Schwefel kommt es zur Bildung von Aluminiumsulfid auf den Innenflächen des Gehäuses. Aluminiumsulfid ist ein elektrischer Nichtleiter, durch den die Stromführung durch die Speicherzelle stark reduziert wird. Ein weiterer Nachteil besteht darin, daß die Festigkeit des Aluminiums bei einer Temperatur von 350°C stark verringert wird.

Bei der Fertigung von Gehäusen aus Stahl ist die Leitfähigkeit bei einer Temperatur von 350°C sehr gering. Der ohmsche Widerstand des Gehäuses beträgt in diesem Fall 30 % des Gesamtwiderstands der Speicherzelle. Durch eine Erhöhung der Wandstärke des Gehäuses kann die elektrische Leitfähigkeit zwar erhöht werden, das Zellgewicht wird jedoch insgesamt erhöht, wodurch die gewichtsbezogene Energie einer solchen Speicherzelle stark reduziert wird.

Aus der G8-A-1 587 905 ist eine elektrochemische Speicherzelle bekannt, die nach außenhin durch ein Gehäuselement begrenzt ist. Der Anodenraum ist zwischen dem Festelektrolyten und dem Gehäuse angeordnet. Ein zusätzliches Rohr, das bei einer Ausführungsform den Anodenraum vollständig begrenzt, ist zwischen dem Gehäuse und dem Anodenraum angeordnet. Dieses Rohr ist auf der dem Gehäuse zugewandten Seite mit einer Widerstandsschicht versehen.

Aus der GB-A-2 020 884 ist eine elektrochemische Speicherzelle bekannt, die nach außenhin von einem Gehäuse begrenzt wird. Dieses Gehäuse ist auf seiner Innenfläche von einer Metallfolie aus rostfreiem Stahl überzogen. Die Folie selbst weist auf ihrer Oberfläche einen Überzug aus Chrom auf.

In der FR-A-2 390 024 ist eine elektrochemische Speicherzelle beschrieben, deren Gehäuse über ein Dichtungselement mit dem Deckel der Speicherzelle verbunden ist. Das Gehäuse wird durch einen becherförmigen Behälter gebildet, der auf seiner Innenfläche einen metallischen Überzug aus Aluminium aufweist.

Der Erfindung liegt deshalb die Aufgabe zugrunde, eine Natrium/Schwefel-Speicherzelle zu schaffen, die ein geringes Gesamtgewicht aufweist, einen hohen gewichts- und volumenbezogenen Energieinhalt sowie eine sehr hohe gewichts- und volumenbezogene Leistung besitzt.

Diese Aufgabe wird erfindungsgemäß durch die Merkmale des Patentanspruches 1 gelöst.

Weitere erfindungswesentliche Merkmale sind in den Unteransprüchen gekennzeichnet.

Die Erfindung wird nachfolgend anhand von Zeichnungen näher erläutert.

Es zeigen:

Figur 1: Eine Speicherzelle, die von zwei Gehäuseelementen umgeben ist,
Figur 2: eine Variante der in Figur 1 gezeigten Speicherzelle,
Figur 3: eine Speicherzelle mit je einem elektrischen Anschlußpol an einer Stirnfläche,
Figur 4: eine inverse Speicherzelle.

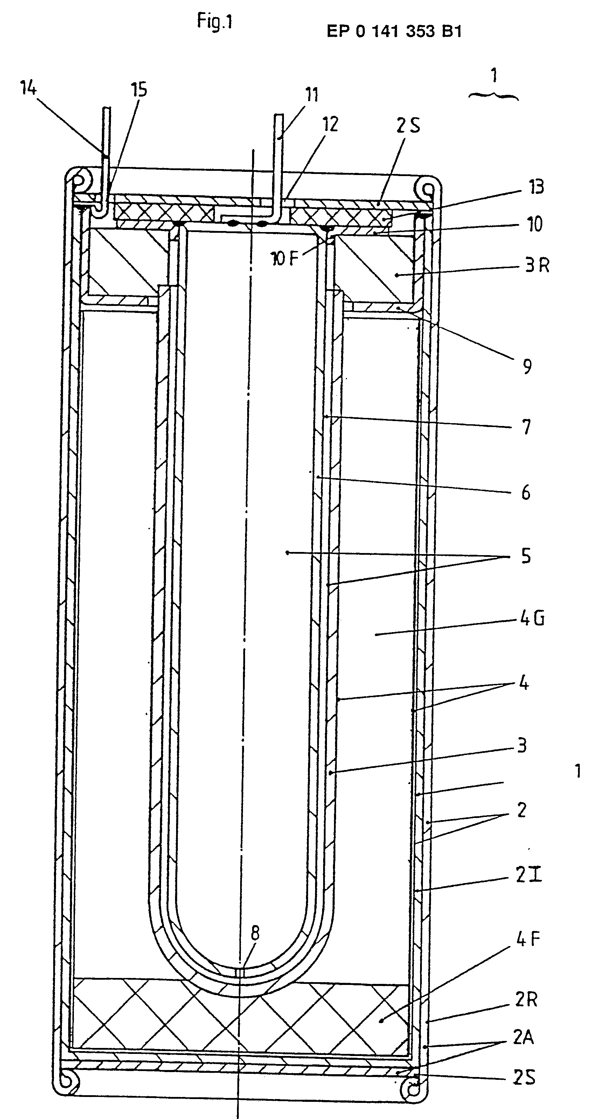

Die in Figur 1 dargestellte Speicherzelle wird im wesentlichen durch ein metallisches Gehäuse 2, das zwei Gehäuseelemente 2A und 2I umfaßt, sowie einen Festelektrolyten 3 gebildet. Das innere Gehäuseelement 2I ist becherförmig ausgebildet und aus Metall gefertigt.

Vorzugsweise wird für die Fertigung des Bechers 2I Aluminium verwendet. Die Innenflächen diese Gehäuseelementes 2I sind mit einem Korrossionsschutz (hier nicht dargestellt) überzogen, so daß das Gehäuse vor den Einwirkungen der Reaktanden bzw. der Reaktionsstoffe geschützt ist. Das äußere Gehäuseelement 2A wird durch ein Rohr 2R gebildet, das das innere Gehäuseelement 2I hüllenartig umgibt, derart, daß seine Innenflächen direkt an die Außenflächen des inneren Gehäuseelementes 2I anschließen. Das äußere Gehäuseelement 2A kann aus einem Metall oder einem organischen bzw. anorganischen Werkstoff gefertigt sein. Zu dem äußeren Gehäuseelement 2A gehören zwei Scheiben 2S.

Jeweils eine solche Scheibe 2S begrenzt die Speicherzelle 1 an der einen bzw. der anderen Stirnfläche.

Im Inneren der Speicherzelle ist der Festelektrolyt 3 angeordnet. Dieser ist ebenfalls becherförmig ausgebildet und aus einer alkaliionenleitenden Keramik, insbesondere aus Betaaluminiumoxid gefertigt. Die Abmessungen des Festelektrolyten 3 sind so gewählt, daß zwischen seinen Außenflächen und den Innenflächen des inneren Gehäuseelementes 2I ein zusammenhängender Zischenraum 4 verbleibt, der als Reaktandenraum dient. Bei dem hier dargestellten Ausführungsbeispiel wird der Zwischenraum 4 als Kathodenraum genutzt. Er ist mit einem Graphitfilz ausgefüllt, welcher mit Schwefel getränkt ist (hier nicht dargestellt). Zwischen dem unteren Ende des Festelektrolyten 3 und dem Boden des inneren Gehäuseelementes 2I ist eine besonders flexible Zwischenlage 4F aus einem Graphitfilz oder einem Keramikfilz angeordnet, der ebenfalls mit Schwefel getränkt ist. An seinem oberen offenen Ende ist der Festelektrolyt 3 mit einem nach außen überstehenden Isolierring 3R verbunden, der aus einer lichtleitenden Keramik, insbesondere aus Alphaaluminiumoxid gefertigt ist. Die Verbindung zwischen dem Festelektrolyten 3 und dem Isolierring 3R erfolgt unter Verwendung eines Glaslotes (hier nicht dargestellt). Das Innere des Festelektrolyten 3 dient als Anodenraum 5. Innerhalb dieses Anodenraumes ist ein Sicherheitsbehälter 6 angeordnet, der aus Metall, beispielsweise Aluminium gefertigt ist. Der Sicherheitsbehälter 6 ist ebenfalls becherförmig ausgebildet. Seine Abmessungen sind so gewählt, daß zwischen seinen Außenflächen und den Innenflächen des Festelektrolyten rundum ein schmaler Sicherheitsspalt 7 verbleibt, der mit einem als Kapillare wirkenden Material (hier nicht dargestellt) ausgefüllt ist. Der Sicherheitsbehälter 6 ist vollständig mit flüssigem Natrium gefüllt. Er weist lediglich eine einzige Öffnung auf, die im unteren Bereich des Sicherheitsbehälters gegenüber dem Boden des Festelektrolyten 3, insbesondere gegenüber dessen runder Kuppe angeordnet ist. Durch die Öffnung 8 kann das Natrium aus dem Sicherheitsbehälter austreten und in den Sicherheitsspalt 7 gelangen, wo es unter der Wirkung des kapillaren Materials so geleitet wird, daß es die Innenflächen des Festelektrolyten überall benetzt.

Erfindungsgemäß ist der Kathodenraum 4 nach außenhin vakuumdicht verschlossen. Hierfür ist der Isolierring 3R an seiner Unterseite und an seiner nach außen gerichteten Begrenzungsfläche von einer becherförmigen Hülle 9 aus Aluminium umgeben. Der obere Bereich des Festelektrolyten 3 ragt durch den Boden der Hülle 9 hindurch. Die Verbindung zwischen dem Isolierring 3R und der Hülle 9 erfolgt mittels des bekannten Thermokompressionsverfahrens. Erfindungsgemäß sind die Abmessungen des Isolierrings 3R so gewählt, daß nach der Verbindung mit der Hülle 9 die Außenflächen derselben bündig an das innere Gehäuseelement 2I angrenzen. Die Unterseite der Hülle 9 schließt den Kathodenraum 4 nach obenhin vollständig ab. Der obere Rand der Hülle 9 ist durch eine Vakuumverschweißung mit dem Inneren Gehäuseelement 2I des Gehäuses 2 verbunden. Auf der Oberfläche des Isolierrings 3R ist eine Ringscheibe 10 aus Aluminium angeordnet, die den oberen Rand des Sicherheitsbehälters 6 umgibt und mit diesem durch eine Vakuumverschweißung fest verbunden ist. Die Ringscheibe 10 ist zusätzlich mit einem nach unten weisenden Flansch 10F versehen, der den Bereich zwischen dem Isolierring 3R und dem Sicherheitsbehälter 6, insbesondere den Sicherheitsspalt 7 vakuumdicht verschließt. Mit Hilfe der Hülle 9 und der Ringscheibe 10 sowie der zusätzlichen Verbindung der Hülle 9 mit dem inneren Gehäuseelement 2I und der weiteren Verbindung der Ringscheibe 10 mit dem Sicherheitsbehälter 6 werden der Kathodenraum 4 und der Anodenraum 5 vakuumdicht nach außenhin verschlossen. Die nach oben weisende Strinfläche des Sicherheitsbehälters 6 ist mit einem L-förmigen Anschlußpol 11 elektrisch leitend verbunden. Der Anschlußpol 11 ist beispielsweise aus einen Kupfer- oder Aluminiumlegierung bzw. aus dispersionsgehärtetem Aluminium gefertigt. Ein Ende des elektrischen anodischen Anschlußpoles 11 ist durch eine Bohrung 12 in der die Speicherzelle 1 nach oben begrenzenden Scheibe 2S hindurchgeführt und ragt einige Millimeter über die Speicherzelle 1 über. Der Anschlußpol 11 ist isoliert durch die Scheibe 2S hindurchgeführt.

Um einen elektrisch leitenden Kontakt zwischen der Scheibe 2S und dem mit dem Sicherheitsbehälter verbundenen Teil des elektrischen Anschlußpoles 11 zu vermeiden ist eine Ringscheibe 13 aus einem isolierenden elastischen Material zwischen der Scheibe 2S und dem Sicherheitsbehälter 6 angeordnet. Die Größe der Scheibe 13 ist so gewählt, daß sie sowohl auf dem Sicherheitsbehälter 6 als auch auf der Ringscheibe 10 aus Aluminium aufliegt.

Der kathodische Anschlußpol 14 wird durch einen Stab aus Aluminium gebildet, der durch eine Bohrung 15 in der Scheibe 2S hindurchgeführt ist und nach außen einige Millimeter über die Speicherzelle 1 übersteht. Das zweite innerhalb der Speicherzelle 1 angeordnete Ende des Anschlußpols 14 ist mit dem oberen Ende der Hülle 9, das über den Isolierring 3 übersteht und mit dem inneren Gehäuseelement 2I verschweißt ist, ebenfalls elektrisch leitend, vorzugsweise durch Verschweißen verbunden. Der kathodische Anschlußpol 14 ist isoliert durch die Öffnung 15 in der Scheibe 2S hindurchgeführt.

Die beiden Scheiben 2S, welche die Stirnflächen der Speicherzellen 1 begrenzen, bilden ebenso wie das Rohr 2R, das ebenfalls zu dem äußeren Gehäuseelement 2A gehört, eine Stütze für das innere Gehäuseelement 2I. Die beiden Scheiben 2S werden durch das an seinen beiden Enden nach innen umgebördelte Rohr 2R gehalten.

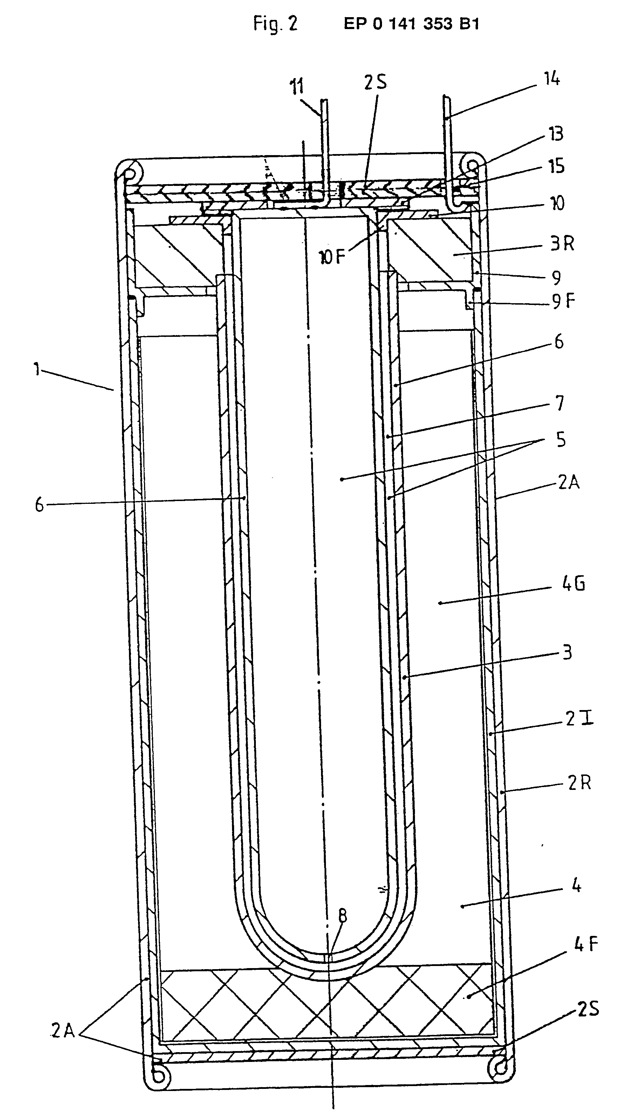

Figur 2 zeigt eine Variante der in Figur 1 dargestellten Speicherzelle. Die Unterschiede zwischen den beiden Speicherzellen bestehen lediglich im Verschlußbereich. Die übrigen Teile dieser Speicherzelle sind so ausgebildet, wie bei der in Figur 1 dargestellten und in der dazugehörigen Beschreibung erläuterten Speicherzelle 1. Entsprechende Bauelemente sind deshalb mit den gleichen Bezugszeichen versehen.

Bei der in Figur 1 dargestellen Speicherzelle ist das innere Gehäuseelement 2I nur soweit geführt, daß es unterhalb des mit dem Festelektrolyten 3 verbundenen Isolierringes 3R endet. Dieser ist auch bei dem hier dargestellten Ausführungsbeispiel von einer becherförmigen Hülle 9 umgeben, die seine Unterseite und seine seitliche Begrenzungsfläche vollständig überdeckt. An der Unterseite ist die Hülle 9 bis zu dem Festelektrolyten 3 geführt. Ferner weist sie im Bereich des inneren Gehäuseelementes 2I einen nach unten gerichteten rundum geführten Flansch 9F auf, der an der Innenseite des inneren Gehäuseelementes 2I fest anliegt. Zusätzlich ist die Hülle 9 in diesem Bereich mit dem inneren Gehäuseelement 2I verschweißt. Die Hülle 9 ist so bemessen, daß sie einige Millimeter über den Isolierring 3 nach oben übersteht. Dort ist sie mit einem kathodischen Anschlußelement 14 verschweißt, das durch eine Bohrung 15 in der Scheibe 2S hindurchgeführt ist, und einige Millimeter über die Speicherzelle 1 übersteht. Um eine elektrisch leitende Verbindung der Scheibe 2S mit dem Sicherheitsbehälter 6 zu vermeiden, ist auch hierbei wiederum eine elastische Ringscheibe 13 aus einem nichtleitenden Material zwischen der Scheibe 2S und dem Sicherheitsbehälter 6 angeordnet, die sowohl auf dem Sicherheitsbehälter 6 als auch auf einer Ringscheibe 10 aus Aluminium aufliegt, welcher auf der Oberseite des Isolierrings 3 angeordnet ist. Der Ringscheibe 10 ist ebenso wie die Hülle 9 unter Anwendung des Thermokompressionsverfahrens mit dem Isolierring 3R verbunden. Sie grenzt direkt an den Sicherheitsbehälter 6 und ist mit diesem verschweißt. Zusätzlich weist sie einen Flansch 10F auf, der in den Sicherheitsspalt 7 zwischen dem Festelektrolyten 3 und dem Sicherheitsbehälter 6 hineinragt und diesen nach außenhin verschließt. Das anodische Anschlußelement 11 ist auch hierbei L-förmig ausgebildet und mit einem Ende mit der Oberfläche des Sicherheitsbehälters 6 verschweißt, während das andere Ende durch eine Öffnung 12 in der Scheibe 2S isoliert nach außen geführt ist, und einige Millimeter über die Speicherzelle 1 übersteht.

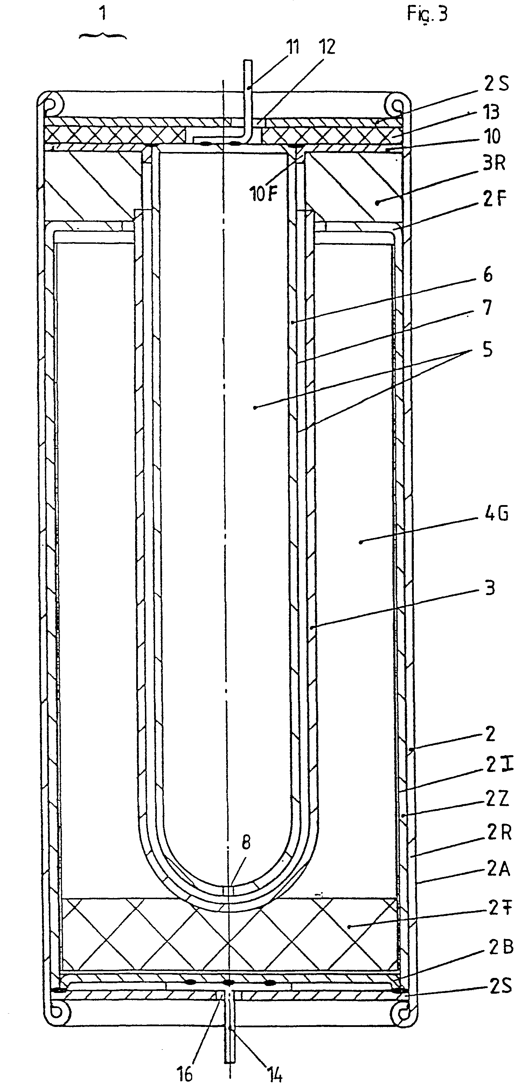

Die in Figur 3 dargestellte Speicherzelle 1 wird durch ein Gehäuse 2 begrenzt, innerhalb dessen ein Festelektrolyt 3 angeordnet ist. Das Gehäuse wird durch zwei Gehäuseelemente, insbesondere ein inneres Gehäuseelement 2I und ein äußeres Gehäuseelement 2A gebildet. Das äußere Gehäuseelement 2A besteht aus einem metallischen Rohr 2R, das die Seitenflächen des inneren Gehäuseelementes 2I stützt. Ferner gehören zu dem äußeren Gehäuseelement 2A zwei Scheiben 2S, welche die Stirnflächen der Speicherzelle 1 bilden und ebenfalls eine stützende Funktion übernehmen. Erfindungsgemäß besteht das innere Gehäuseelement 2I aus einem Zylinder aus Aluminium, dessen Innenflächen einen Korrosionsschutz (hier nicht dargestellt) aufweisen. Zur Bildung eines becherförmigen inneren Gehäuseelementes 2I ist an der Unterseite dieses Zylinders eine Aluminiumplatte 2B mit dem unteren Randbereich des Zylinders 2Z verschweißt. An seinem oberen Ende ist der Aluminiumzylinder mit einem nach innen weisenden Flansch 2F versehen, der bis zum Festelektrolyten 3 geführt ist. Der Festelektrolyt 3 ist auch hierbei becherförmig ausgebildet. Seine Abmessungen sind so gewählt, daß zwischen seinen Außenflächen und den Innenflächen des Gehäuseelementes 2I ein zusammenhängender Zwischenraum gebildet ist, der als Kathodenraum 4 dient. Dieser ist mit einem Graphitfilz 4G gefüllt, welcher mit Schwefel getränkt ist. Zwischen dem unteren Ende des Festelektrolyten, insbesondere zwischen dessen Kuppe und dem Boden des Gehäuseelementes 2I ist ein elastischer Filz 2F aus Graphit oder Kohlenstoff angeordnet, der ebenfalls mit Schwefel getränkt ist. Der Innenbereich des Festelektrolyten 3 dient als Anodenraum 5. Ebenso wie bei bei der in Figur 1 dargestellten Ausführungsform ist innerhalb des Festelektrolyten 3 ein Sicherheitsbehälter 6 angeordnet, der vollständig mit Natrium ausgefüllt ist. Der Sicherheitsbehälter ist bis auf eine Öffnung 8, die im unteren Bereich des Sicherheitsbehälters angeordnet, vollständig verschlossen. Die Abmessungen des Sicherheitsbehälters 6 sind gemäß dem in Figur 1 dargestellten Ausführungsbeispiel gewählt, so daß auch zwischen ihm und dem Festelektrolyten 3 ein Sicherheitsspalt 7 geschaffen ist, der mit einem als Kapillare wirkenden Material ausgefüllt ist. Durch die Öffnung 8 kann das in dem Sicherheitsbehälter 6 enthaltene Natrium in den Sicherheitsspalt 7 austreten. Das obere Ende des Festelektrolyten ist auch hierbei mit einem Isolierring 3R fest verbunden. Der Isolierring 3R ist auf dem nach innen weisenden Flansch 2F des inneren Gehäuseelementes 2I abgestützt und durch Thermokompression mit diesem verbunden. Hierdurch wird der Kathodenraum 4 vakuumdicht nach außenhin verschlossen. Auf der nach oben weisenden Seite des Isolierringes 3 ist eine Ringscheibe 10 aus Aluminium angeordnet. Die Abmessungen der Ringscheibe 10 sind so gewählt, daß sie sowohl an das äußere Gehäuseelement 2A als auch an den über den Festelektrolyten 3 überstehenden Sicherheitsbehälter 6 angrenzt. Die Ringscheibe 10 ist mit dem Sicherheitsbehälter 6 verschweißt und mit dem Isolierring 3 durch Thermokompression fest verbunden. Die Ringscheibe 10 weist im Bereich des Sicherheitsbehälters 6 einen nach unten gerichteten Flansch 10F auf, der in den Sicherheitsspalt 7 hineinragt und diesen verschließt. Nach obenhin ist die Speicherzelle durch die zu dem äußeren Gehäuseelement gehörende Scheibe 2S verschlossen. Sie ist vorzugsweise aus dem gleichen Material gefertigt wie der Zylinder 2Z. Eine ebensolche Scheibe 2S ist gegen den Boden des inneren Gehäuseelementes 2I gesetzt. Die beiden Scheiben 2S werden durch den Zylinder 2Z gehalten, dessen oberes und unteres Ende nach innen umgebördelt ist. Das obere Ende des Sicherheitsbehälters 6 ist mit einem L-förmigen anodischen Anschlußelement 11 verschweißt, dessen zweites Ende durch eine Bohrung 12 in der Scheibe 2S isoliert nach außen geführt ist. Um einen elektrischen Kontakt zwischen dem in der Speicherzelle angeordneten Ende des anodischen Anschlußelementes 11 und der Scheibe 2S zu vermeiden, ist eine isolierende Ringscheibe 13 vorgesehen, die aus einem elastischen nichtleitenden Material gefertigt und auf dem Sicherheitsbehälter 6 und auf der Ringscheibe 10 abgestützt ist.

Bei dem hier dargestellten Ausführungsbeispiel ist das kathodische Anschlußelement 14 im Bereich der zweiten Stirnfläche der Speicherzelle angeordnet. Es ist stempelförmig ausgebildet. Die Auflagefläche des Anschlußelementes 14 ist mit der Bodenplatte 2B des inneren Gehäuseelementes 2 verschweißt. Der Schaft des Anschlußelementes 14 ist durch eine Bohrung 16 hindurchgesteckt und nach außen geführt. Um das Anschlußelement 14 zwischen der Scheibe 2S und der Bodenplatte 2B anordnen zu können, weist die Bodenplatte 2B einen U-förmigen Querschnitt auf, und ist so in den Zylinder 2Z eingeschweißt, daß ihre seitlichen Ränder nach außen gerichtet sind, so daß zwischen der Bodenplatte und der Scheibe 2S ein Spalt verbleibt, innerhalb dessen der stempelartige Bereich des Anschlußelementes 14 angeordnet werden kann.

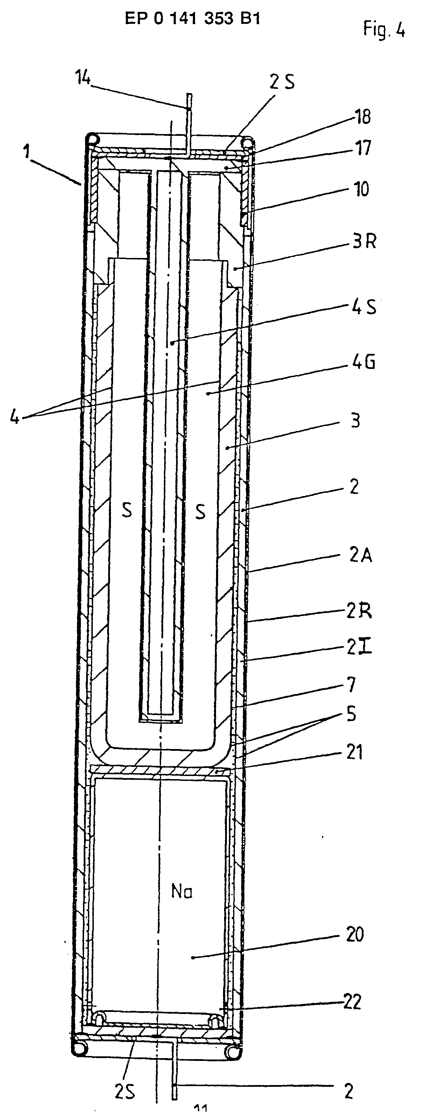

In Figur 4 ist eine inverse Speicherzelle 1 dargestellt, deren Gehäuse 2 ebenfalls durch zwei Gehäuseelemente 2A und 2I gebildet wird. Das innere Gehäuseelement 2I ist becherförmig ausgebildet und aus Aluminium gefertigt. Es wird hierbei als anodischer Stromkollektor verwendet. Seine Innenflächen sind mit einem Korrosionsschutz (hier nicht dargestellt) versehen. Das äußere Gehäuseelement 2A kann aus einem Metall oder einem organischen bzw. anorganischen Werkstoff gefertigt sein. Es besteht im wesentlichen aus einem Rohr 2R, welches das innere Gehäuseelement 2I hüllenartig umgibt und direkt an dessen Außenfläche anliegt. Im Inneren des Gehäuselementes 2I ist der Festelektrolyt 3 angeordnet, der auch hierbei aus Betaaluminiumoxid gefertigt ist. Des weiteren befindet sich im inneren Gehäuseelement 2I ein Vorratsbehälter 20 für das Natrium. Der Vorratsbehälter 20 ist im unteren Bereich der Speicherzelle 1 angeordnet, während sich der Festelektrolyt im oberen Bereich befindet. Die Abmessungen des Vorratsbehälters 20 sind so bemessen, daß seine Länge etwa ein Drittel der Gesamtlänge der Speicherzelle 1 beträgt. Der Festelektrolyt 3 ist unter Zwischenfügung eines Graphitfilzes 21 auf den Vorratsbehälter 20 aufgesetzt. Die Abmessungen des Festelektrolyten 3 und des Vorratsbehälters 20 sind so gewählt, daß zwischen ihren Außenflächen und den Innenflächen des inneren Gehäuseelementes 2I ein zusammenhängender Sicherheitsspalt 7 verbleibt, der mit einem als Kapillare dienenden Material ausgefüllt ist. Der Vorratsbehälter 20 weist in seinem unteren seitlichen Bereich rundum Öffnungen 22 auf, über die das Natrium aus dem Vorratsbehälter 20 austreten und in den Sicherheitsspalt 7 gelangen kann. Dieser Sicherheitsspalt 7 dient bei dem hier dargestellten Ausführungsbeispiel als Anodenraum 5. Der Vorratsbehälter 20 ist ansonsten allseitig verschlossen. Im Inneren des Festelektrolyten 3 ist der Kathodenraum 4 angeordnet, der mit einem Schwefel getränkten Graphit 4G ausgefüllt ist. Zusätzlich ist innerhalb des Kathodenraums ein kathodischer Stromkollektor in Form eines Stabes 4S angeordnet. Am oberen Ende des Festelektrolyten, im Bereich seiner Öffnung ist ein Isolierring 3R befestigt, der nach außen übersteht. Die Verbindung zwischen dem Isolierring und dem Festelektrolyten erfolgt vorzugsweise über ein Glaslot. Der untere Bereich der seitlichen Begrenzungsfläche des Isolierringes 3R ist über Thermokompression mit dem inneren Gehäuseelement 2I verbunden. Die Seitenflächen des Isolierringes sind im oberen Bereich von einer Aluminiumhülle 10 umgeben, die mit dem Isolierring 3R und dem Rohr 2R ebenfalls durch Thermokompression verbunden ist. Auf den Isolierring 3R ist eine Platte 17 aus Aluminium aufgelegt, die mit der Hülle 10 fest verbunden ist. Mit der Oberfläche der Platte 17 ist ein elektrisches Anschlußelement 14 verbunden, dessen zweites Ende durch Bohrungen (hier nicht dargestellt), die in einer Glimmerscheibe 18 und in der Scheibe 2S angeordnet sind, nach außen geführt ist. Die Glimmerscheibe 18 ist auf der Aluminiumscheibe 17 angeordnet. Auf ihr liegt die Scheibe 2S, welche das äußere Gehäuseelement 2A mitbildet und eine Stützfunktion ausübt. Auf der gegenüberliegenden Stirnseite ist ebenfalls eine Scheibe 2S vorgesehen, die gegen den Boden des inneren Gehäuseelementes 2I gesetzt ist. Die Scheibe 2S wird von dem anodischen Anschlußelement 11 durchsetzt, welches mit dem Boden des inneren Gehäuseelementes 2I fest verbunden, insbesondere verschweißt ist. Die beiden Scheiben 2S, die zu dem äußeren Gehäuseelement 2A gehören, sind aus dem gleichen Material wie das Rohr 2R gefertigt. Durch das Umbördeln des Rohres 2R an seinen beiden Enden werden die beiden Scheiben 2S in der gewünschten Position gehalten.

## Patentansprüche

1. Elektrochemische Speicherzelle (1) auf der Basis von Alkalimetall und Schwefel mit mindestens einem Anodenraum (5) und einem Kathodenraum (4) die durch einen alkaliionenleitenden Festelektrolyten (3) voneinander getrennt und wenigstens bereichsweise von einem Gehäuse (2) begrenzt sowie mit mindestens einem anodischen und einem kathodischen Anschlußelement (11, 14) versehen sind, und das Gehäuse (2) in ein inneres Gehäuseelement (2I) und ein äußeres metallisches Gehäuseelement (2A) unterteilt ist, *dadurch gekennzeichnet*, daß das innere metallische Gehäuselement (2I) für die elektrische Leitung vorgesehen, vakuumdicht verschlossen und aus hochleitfähigem, duktilem oder hochwarmfestem oder dispersionsgehärtetem Aluminium gefertigt ist, daß das äußere Gehäuseelement (2A) als 0,3 bis 0,5 cm dicker Stützmantel ausgebildet ist, der das innere Gehäuseelement (2I) eng umschließt, und aus einem Rohr (2R) und zwei Scheiben (2S) besteht, und daß das innere Gehäuseelement (2I) von innen her durch das in den angrenzenden Reaktandenraum (4, 5) gefüllte Material gestützt ist.

2. Elektrochemische Speicherzelle nach Anspruch 1, *dadurch gekennzeichnet*, daß das äußere Gehäuseelement (2A) aus Stahl oder Edelstahl gefertigt ist.

3. Elektrochemische Speicherzelle nach Anspruch 1, *dadurch gekennzeichnet*, daß das äußere Gehäuselement (2A) aus einem unlegierten Stahl gefertigt ist.

4. Elektrochemische Speicherzelle nach Anspruch 1, *dadurch gekennzeichnet*, daß das äußere Gehäuseelement (2I) aus Titan oder einem dispersionsgehärteten Aluminium gefertigt ist.

5. Elektrochemische Speicherzelle nach Anspruch 1, *dadurch gekennzeichnet*, daß das äußere Gehäuseelement (2A) aus einem faserverstärktem organischen oder anorganischen Werkstoff gefertigt ist.

## Claims

1. Electrochemical storage cell (1) based on alkali metal and sulphur, having at least one anode space (5) and one cathode space (4) which are separated from one another by an alkali-metal-ion-conducting solid electrolyte (3) and are bounded at least over a certain area by a housing (2) and are provided with at least one anodic and one cathodic connection element (11, 14), and the housing (2) is subdivided into an inner housing element (2I) and an outer, metallic housing element (2A), characterized in that the inner, metallic housing element (2I) is provided for the electrical conduction, is sealed vacuum-tightly and is manufactured from highly conductive, ductile or high-temperature-resistant or dispersion-hardened aluminium, in that the outer housing element (2A) is designed as a 0.3 to 0.5 cm-thick supporting jacket which closely surrounds the inner housing element (2I) and comprises a tube (2R) and two discs (2S), and in that the inner housing element (2I) is supported from inside by the material introduced into the adjoining reactant space (4, 5).

2. Electrochemical storage cell according to Claim 1, characterized in that the outer housing element (2A) is manufactured from steel or special steel.

3. Electrochemical storage cell according to Claim 1, characterized in that the outer housing element (2A) is manufactured from an unalloyed steel.

4. Electrochemical storage cell according to Claim 1, characterized in that the outer housing element (2I) is manufactured from titanium or a dispersion-hardened aluminium.

5. Electrochemical storage cell according to Claim 1, characterized in that the outer housing element (2A) is manufactured from a fibre-reinforced, organic or inorganic material.

## Revendications

1. Elément accumulateur (1) électrochimique, à base de métal alcalin et de soufre, comprenant au moins un compartiment anode (5) et un compartiment cathode (4) qui sont séparés l'un de l'autre par un électrolyte solide (3) conducteur de ions alcalins, sont délimités par zones au moins par une enveloppe (2) et sont munis d'au moins un élément de raccordement anodique et un élément de raccordement cathodique (11, 14), et l'enveloppe (2) est divisée en un élément métallique d'enveloppe intérieur (2I) et un élément métallique d'enveloppe extérieur (2A), caractérisé par le fait que l'élément métallique d'enveloppe intérieur (2I) est prévu pour la conduction électrique, est clos hermétiquement au vide et est fabriqué en un aluminium de grande conductivité, ductile ou résistant à haute température, ou durci par précipitation, que l'élément d'enveloppe extérieur (2A) est sous forme d'une chemise de support d'une épaisseur de 0,3 à 0,5 cm qui entoure étroitement l'élément d'enveloppe (2I) intérieur et est composée d'un tuyau (2R) et de deux disques (2S) et que l'élément d'enveloppe intérieur (2I) est soutenu depuis l'intérieur par le matériau chargé dans l'espace contigu réactant (4, 5)

2. Elément accumulateur électrochimique selon revendication 1, caractérisé par le fait que l'élément d'enveloppe extérieur (2A) est fabriqué en acier ou en acier spécial.

3. Elément accumulateur électrochimique selon revendication 1, caractérisé par le fait que l'élément d'enveloppe extérieur (2A) est fabriqué en acier non allié.

4. Elément accumulateur électrochimique selon revendication 1, caractérisé par le fait que l'élément d'enveloppe extérieur (2A) est fabriqué en titane ou en aluminium durci par précipitation.

5. Elément accumulateur électrochimique selon revendication 1, caractérisé par le fait que l'élément d'enveloppe extérieur (2A) est fabriqué en un matériau organique ou inorganique renforcé de fibres.

Fig.1     EP 0 141 353 B1

Fig. 2      EP 0 141 353 B1

EP 0 141 353 B1

Fig. 3

Fig. 4